# EUROPEAN PATENT SPECIFICATION

(11) **EP 1 271 671 B1**
(45) Date of publication and mention of the grant of the patent: **19.10.2011**
(21) Application number: 02013501.8
(22) Date of filing: 17.06.2002
(51) Int. Cl.: H01M 2/02, C09D 5/24

(54) **Cathode coating dispersion**
Dispersion zum Beschichten von Kathoden
Dispersion de revêtement pour cathodes

(30) Priority: 22.06.2001 US 888306
(43) Date of publication of application: 02.01.2003
(73) Proprietor: Henkel AG & Co. KGaA, 40589 Düsseldorf (DE)
(72) Inventor: Rahim, Marufur, Fort Gratiot, Michigan 48059 (US); Kadakia, Surendra, Clinton Township, Michigan 48038 (US)
(74) Representative: Held, Stephan

(56) References cited:
- EP-A- 0 643 428
- GB-A- 2 242 682
- US-A- 4 810 600
- US-A- 4 981 729
- US-A- 5 804 615
- US-A- 5 968 682

## Description

### FIELD OF THE INVENTION

This invention relates to one pot high temperature curable thermoset cathode coating dispersions. The formulations contain graphite and/or carbon black, acrylic resin or butadiene acrylonitrile or styrene butadiene or epoxy and epoxy ester. The coatings are cured with appropriate crosslinkers such as melamine and/or phenolic resin and/or carbodiimide and acid catalyst. These coatings are suitable for use in batteries, fuel cells, capacitors and other energy storage devices.

### BACKGROUND OF THE INVENTION

Alkali battery dry cells are manufactured by pre-forming a steel can with a nickel plating inside the can. The cathode, a compressed mixture of manganese dioxide, carbon and possibly other additives is positioned inside the can in the form of a hollow cylinder which is in close contact with the can inner surface. Alternatively, rings of cathode materials can be formed outside the cell and then pushed into the can. The inside of the can is treated with a conductive dispersion which is placed between the inside surface of the can and the cathode mixture in order to improve the electrical contact between the can and the cathode mixture and to prevent corrosion of the nickel layer and the can from the electrolytes.

In the past various emulsions have been utilized in an attempt to maximize electrical contact and prevent corrosion in batteries. These emulsions generally contain graphite and/or carbon black in combination with a binder. For example, U.S. Patent No. 4,810,600 utilizes a dispersion containing graphite and/or carbon black in combination with a binder of a) vinyl acetate and ethylene, b) vinyl acetate and vinyl chloride, c) styrene and butadiene, or d) vinyl acetate, vinyl chloride and ethylene. In addition, other dispersions have been utilized containing binders of aromatic polyurethane, styrene acrylic, aliphatic polyester polyurethane, vinyl acetate acrylic, aliphatic polycarbonate urethane and fluoropolymer. All the above dispersions were used as a thermoplast which requires no crosslinker during the cure. After final cure on nickel plated steel all of these various dispersions exhibited some form of failure when subjected to high concentrations of potassium hydroxide. The dispersions in some cases showed high electrical resistance after the KOH test as opposed to before the test and in some cases the binders either became soft or lost adhesion when sprayed on the nickel plated panel, dried at 80°C for 20 minutes and then immersed in 40% KOH solution for 72 hours at 80 °C. One of the main reasons for the softness is due to lower Tg (glass transition temperature) of the binder. Harder coatings which require higher Tg and will not soften at higher temperature, can be achieved by a crosslinking reaction with other resins.

The objective of the present invention is to provide one component, heat activated crosslinking conductive coatings for use in batteries, fuel cell, capacitor or other energy storage devices. The dispersion is made of graphite and or carbon black, binders, crosslinkers and a catalyst. The coatings form a stable electrically conducting cathode layer which in turn improves the storage and discharge properties of the energy device. The improved properties of the coating also include the strong adherence of the coating with the cathode surface when it is subjected to potassium hydroxide and/or elevated temperatures. It is a further objective to provide a dispersion which may be utilized on the bipolar plates of a fuel cell or as a current collector for electrodes used in an ultracapacitor.

### SUMMARY OF THE INVENTION

The dispersion is a one pot system as defined in claim 1. These one pot systems have shown excellent resistance to alkali at higher temperature and generate good conductivity when applied on a nickel plated steel. The formulation containing butadiene acrylonitrile has also shown good acid resistance as well. Consequently, these coatings can be used as a cathode coating for energy storage devices such as alkaline batteries that will generate suitable conductivities as well as an excellent resistance to chemicals in the alkaline batteries, fuel cells and capacitors and other energy storage devices.

### DETAILED DESCRIPTION OF THE INVENTION

The dispersion of the present invention is comprised of a graphite and/ or carbon black with at least two kinds of resins which contain carboxylic functionality for cross linking reactions. The cross linking reactions also occur only after applying higher temperature for a period of time. The cross linking reactions generate a coating which is very resistant to alkaline and acid environment and produces a good electrically conducting layer.

The graphite dispersion is specifically developed as a cathode current collector for alkaline batteries. This dispersion serves as a coating on a current collector and prevents the corrosion of the electrode from the corrosive chemical environment inside the alkaline batteries. The dispersion, specifically the formulation containing butadiene-acrylonitrile or epoxy as a binder, is not only alkaline resistant but also resistant to acidic environments. Consequently, the coating can be used as well in a fuel cell where higher resistance of the current collector coating is desired to the bipolar electrodes.

These dispersions are primarily utilized for coating a cathode holder or battery can. Along the same line these dispersions are also suitable for application as current collector coatings on electrodes of an ultracapacitor. These coatings form the connecting layer that improves the electrical contact between the electrode and the electrolyte, which may be aqueous or non-aqueous in nature. Preferred graphites for use in the dispersion are natural or synthetic graphites of high purity and high crystallinity. In the dispersion mixture, the electrically conductive graphite is used in the amount of about 30 - 90% by weight of the total solid. To prepare a proper dispersion, demineralized water is used as a dispersing media. Also, to obtain problem free coatings the following additives are added. For example, defoamers, preservatives, surface agent and/or dispersing agents may be utilized. Defoamers which may be utilized include BYK 022, BYK 019, BYK 24 (BYK-Chemie), DF 37, DF-40, DF 120, DF 70, DF-75, DF-58, DF 60, DF-62, DF 66, DF 574, DF 696 (Air Products & Chemicals, Inc.), Nalco 2300, Nalco 2305, Nalco 2302 (Rohm & Haas Co.), Triton CF-32 (BASF Corp.), L-62 (Witco), Coatsil 1300 (Condea Vista) and Alfol 8 alcohol. Preservatives which may be utilized include Busan 85, Busan 2024, Busan 1024 (Buckman Laboratories), Hyamine 10-X, Hyamine 2389 (Rohm & Haas Co.), Promexal X50 (Zeneca), Parmetol DF 18 (S&M Special Additives), Kathon 886 (Rohm & Haas Co.) and Nuosept 101 (Creanova). Dispersing agents which may be utilized include, Busperse 229 (Buckman Laboratories), Tamol N, Tamol 731, Tamol 850, Tamol SN Rohm & Haas Co.), Daxad 30-30, Daxad 11, Daxad 15, Daxad 19 (W&R Grace Co.), CT-136, CT 141, CT 151, CT 161, CT 171 (Air Products & Chemicals, Inc.), Disperbyk 182, Disperbyk 190 and Disperbyk 185 (BYK-Chemie). Wetting agents which may be employed include Tween 20 (Spectrum Quality Products), Orotan and Silwet L-7068 (Witco). Surfactants which may be utilized include 104A, 104B, 104DPM, 104E, 104H, 104NP and 104PA (Air Products & Chemicals, Inc.), and BYK 333.

In a preferred embodiment, the additives comprise from about 0.01 to about 5% of the total formulation weight. In an especially preferred embodiment, a wetting agent may also be added to the mixture.

In order to form a suitable resin dispersion the graphite and or carbon black are mixed with acrylic latex and epoxy ester. The acrylic latex in this application contains styrene and acrylic or butadiene resin in the polymeric backbone of the binder system. The epoxy ester preferably has an acid number of 10- 100. The ratio of acrylic to styrene or butadiene resin is preferably in the range of about 0.01 to about 9. Similarly, a second dispersion is developed for the same application which contains graphite and or carbon black in combination with butadiene acrylonitrile and epoxy ester. All of the above binders contain carboxylic functionality to provide the crossliking reaction with melamine and or carbodiimide. A third dispersion is made with graphite and/or carbon black which contains epoxy and epoxy ester. In addition, the dispersion also contains melamine and phenolic resin as crosslinkers. In order to achieve proper conductivity for the desired application, it is necessary to prepare the mixture with the proper ratio of graphite and/or carbon black to binders. For example, for use with battery cans the proper ratio of graphite and/or carbon black to binder is in the range of about 1 to 6, with a preferred range of about 1 to 4. The overall water content of the dispersion is preferably in the range of about 30 - 90% by weight and the graphite and/or carbon black mixture is preferably about 10 - 60% by dry mass weight.

A stable dispersion is formed in the presence of the proper additives and the binders. The viscosity ranges from 50 - 1200 mPa-sec. For proper curing the dispersion also contains one or more crosslinkers and an acid catalyst. The preferred crosslinkers are melamine, carbodiimide, phenolic or mixtures thereof. The acid catalyst is used to catalyze the reaction between the melamine and the binders. A curing agent may be utilized comprising a melamine and preferably a partially alkylated melamine with a higher imino group

Preferred crosslinkers include fully or partially alkylated melamine. Available crosslinkers include C-327, C-324, C-325, C-1158, C-323, C-303, C-350, C-370, C-385, C-1123 (CYTEC) and Ucarlink XL 29SE (Union Carbide) .

The reaction between the carboxylic functionality and melamine is catalyzed by sulfonic acid of various types including blocked sulfonic acids. More specifically the amine salt of para-Toluene Sulfonic Acid (p-TSA), such as BYK-Catalyst 450, BYK-Catalyst 460 ( BYK Chemie), Nacure 2107 and Nacure 2500, Nacure 49-110, (King Industries, Inc.), or epoxy blocked Dinonylnaphthalene Sulfonic acid, such as Nacure 1419 (King Industries Inc.), CyCat 296-9 catalyst (Cytec) or Nacure 49-110.

Preferred phenolic resins include Phenodur PR 308, Phenodur PR 307, Phenodur VPW 1942/52WA (Solutia).

Following its preparation, the coating is then applied to the surface via pouring, brushing, spraying or dipping and cured at elevated temperature. The water may be removed by allowing it to dry, by warming or by application of a vacuum. A preferred curing temperature is within the range of about 100 °C - to about 250 °C. Depending upon the chosen curing process, the time of curing ranges from 15 seconds to 16 minutes. The rate of curing can be controlled by changing the amount of crosslinkers and the catalysts. After curing, a mechanically and chemically resistant, electrolyte insoluble protective film remains on the surface. The resistivity of the resulting coating is about 5 - 100 ohm per square. The resistance of the protective coating formed by the dispersion is not more than twice the initial value after the coating has been exposed to a 40% KOH solution for a period of 72 hours at 80 °C. The amount of coating to be applied is selected so that the film thickness of the resulting protective film after evaporation of the water is preferably about 5 - 200 µm and most preferably about 20 - 100 µm. A uniform thickness is obtained via the pseudoplastic and thixotropic properties of the dispersion.

The invention may be better understood by reference to the following examples which are intended for the purpose of illustration and are not to be construed as in any way limiting the scope of the present invention.

### EXAMPLES

Two formulations were prepared by the following steps.
1. Load 90% demineralized water, dispersant and celluose into ring mill. Agitate 5-10 minutes or until dissolved.
2. Add defoamer, carbon black and graphite powder
3. Circulate mill for 5 hours or until minimum Hegman of 5.0 is achieved.
4. Make letdown as follows: Premix epoxy ester and DMEA before adding to the batch then let it mix for 10 minutes. Then add the latex and melamine and or carbodiimide and let it mix for 15-20 minutes. Before adding the catalyst, the batch temperature is adjusted to about 32 °- 35 °C and then the catalyst is added. The viscosity is adjusted with water and PH with DMEA and or ammonia.

The components of each formulation are set out in Example 1 and 2.

**EXAMPLE 1**

| | |
|---|---|
| Carbon black | 3.030 grams |
| (Vulcan XC-72 pellets) | |
| Cellulose | 0.69 |
| Dimethylethanolamine | 0.31 |
| Defoamer | 0.16 |
| Dispersion Agent | 0.77 |
| Demineralized Water | 49.92 |
| Synthetic Graphite | 20.63 |
| (graphite 39 powder) | |
| Chempol 010-0453 | 2.470 |
| Neocryl A-662 | 17.28 |
| Cymel 323 | 4.63 |
| Nacure X49-110 | 0.25 |
| | 100 grams |

**EXAMPLE 2**

| | |
|---|---|
| Carbon black | 3.030 grams |
| (Vulcan XC-72 pellets) | |
| Cellulose | 0.69 |
| Dimethylethanolamine | 0.25 |
| Defoamer | 0.16 |
| Dispersion Agent | 0.77 |
| Demineralized Water | 45.64 |
| Synthetic Graphite | 20.63 |
| (graphite 39 powder) | |
| Chempol 010-0453 | 2.470 |
| Tylac 97767 | 22.74 |
| Cymel 323 | 3.86 |
| Nacure X49-110 | 0.25 |
| XL 29SE | 1.23 |
| | 100 grams |

**EXAMPLE 3**

| | |
|---|---|
| Carbon black | 3.030 grams |
| (Vulcan XC-72 pellets) | |
| Cellulose | 0.69 |
| Dimethylethanolamine | 0.48 |
| Defoamer | 0.16 |
| Dispersion Agent | 0.77 |
| Demineralized Water | 53.07 |
| Synthetic Graphite | 20.63 |
| (graphite 39 powder) | |
| Chempol 010-0453 | 2.470 |
| Phenodur VPW 1942/52WA | 13.82 |
| Cymel 323 | 4.63 |
| Nacure X49-110 | 0.25 |
| | 100 g |

The resulting coatings from Examples 1 and 2 were sprayed on nickel-plated panels and cured at 150 °C for 3 minutes or 1 minute at 205 °C. The coating from Example 3 were baked at 205° C for 3 minutes. The nickel-plated panel was then placed in a 40% KOH solution for 72 hours at 80°C. The panels were then removed from the solution, washed with running water and then dried in an oven for 30 minutes at 60°C. A tape test was performed wherein Scotch brand tape was firmly pressed onto each sample and then slowly removed at a 90 degree angle. Excellent adhesion was shown by each sample in that none of the coating was removed via the tape test.

While the invention has been described with particular reference to certain embodiments thereof, it will be understood that changes and modifications may be made by those of ordinary skill within the scope of the following claims.

## Claims

1. A coating dispersion for coating an energy storage device comprised of graphite, carbon black or a mixture thereof, a binder, and one or more crosslinking agents, wherein the coating dispersion is applied as a homogeneous aqueous dispersion which forms a protective film on the energy storage device, wherein the binders are selected from the group consisting of styrene acrylic, butadiene acrylonitril, butadiene styrene or epoxy with epoxy ester, and wherein melamine and/or carbodiimid crosslinkers are used with styrene acrylic, butadiene acrylonitril and butadiene styrene binders, whereas phenolic resin and/or melamine crosslinkers are used with epoxy binders.

2. The coating dispersion of claim 1, wherein the ratio of the graphite, carbon black or mixture thereof to binder is in the range of 1 to 6.

3. The coating dispersion of claim 2, wherein the ratio of the graphite, carbon black or mixture thereof to binder is in the range of 1 to 4.

4. The coating dispersion of claim 2, wherein the dispersion has a water content between about 30 to about 90 % by weight.

5. The coating dispersion of claim 4, wherein the graphite, and or carbon black mixture is preferably 10 - 60% by dry mass weight.

6. The coating dispersion of claim 2, wherein the dispersion additionally contains one or more defoamers, preservatives, dispersing agents, wetting agents, surfactants or mixtures thereof.

7. The coating dispersion of claim 6, wherein the one ore more defoamers, preservatives, dispersing agents, wetting agents, surfactants or mixtures thereof comprise between 0,01 to 5 % of the total formulation weight.

8. The coating dispersion of claim 7, wherein the dispersion contains 0.05 to 5 % by weight of a wetting agent.

9. The coating dispersion of claim 6, wherein the dispersion contains 0.05 to 5 % of a surfactant.

10. The coating dispersion of claim 5, wherein the curing agent is a partially alkylated melamine with higher imino group.

11. The coating dispersion of claim 9 comprising from 0 to 5 % by weight of second cross-linking agent.

12. The coating dispersion of claim 11, wherein the second cross-linking agent is carbodiimide.

13. The coating dispersion of claim 10 further comprising a catalyst selected from the group consisting of amine salt of para-Toluene Sulfonic Acid, epoxy blocked Dinonylnaphthalene Sulfonic acid, or mixtures thereof.

14. The coating dispersion of claim 13, wherein the dispersion has a viscosity of between 50 to 1200 cps.

15. The coating dispersion of claim 14 wherein the binder contains an epoxy ester of acid of 10-100.

16. The coating dispersion of claim 14, wherein the dispersion contains styrene and acrylic having a styrene/acrylic ratio in the range of 0.01 to 9.

17. The coating dispersion of claim 14, wherein the dispersion contains styrene butadiene resin having a styrene/butadiene ratio in the range of 0.1 to 9.

18. The coating dispersion of claim 14 wherein the dispersion contains butadiene acrylonitrile having a ratio on the range of 0.01 to 9.

19. A method of curing the coating dispersion of claim 1 wherein the curing temperature is ranging from 100 °C to 250°C for about 15 seconds to about 16 minutes.

20. A protective film which is formed by the coating dispersion of claim 1 having a resistivity in the range of 5 to 100 ohm per square.

21. The protective film of claim 20 having a resistance which is not more than twice the initial value after exposure of the protective film to a 40 % KOH solution for a period of 72 hours at 80°C.

22. Use of the coaching dispersion of claim 1 for the preparation of a cathode coating for an energy storage device selected from the group consisting of battery, fuel cell or capacitor.

23. Use of the coating dispersion of claim 1 for the preparation of an electrically conductive protective film in an energy storage device wherein the conductive protective film is in the range of 5 to 200 µm thick.

24. Use according to claim 22, wherein the energy storage device is an alkaline battery containing an electrically conductive protective film, wherein the conductive protective film is in the range of 20 to 100 µm thick.

25. Use according to claim 22, wherein the energy storage device is a fuel cell containing an electrically conductive protective film, wherein the conductive protective film is in the range of 5 to 200 µm thick.

26. Use according to claim 25, wherein the conductive protective film is in the range of 20 to 100 µm thick.

27. Use according to claim 22, wherein the energy storage device is a capacitor containing an electrically conductive protective film, wherein the conductive protective film is in the range of 5 to 200 µm thick.

28. Use according to claim 27, wherein the conductive protective film is in the range of about 20 to about 100 µm thick.

## Patentansprüche

1. Eine Beschichtungsdispersion zum Beschichten eines Energiespeichergeräts, umfassend Graphit, Ruß oder ein Gemisch davon, ein Bindemittel und ein oder mehrere Vernetzungsmittel, wobei die Beschichtungsdispersion als homogene wässrige Dispersion aufgebracht wird, die einen Schutzfilm auf dem Energiespeichergerät bildet, wobei die Bindemittel ausgewählt sind aus der Gruppe, bestehend aus Styrol/Acrylaten, Butadien/Acrylonitril, Butadien/Styrol oder Epoxy mit Epoxyestern, und wobei Melamid und/oder Carbodiimidvernetzungsmittel mit Styrol/Acrylaten, Butadien/Acrylonitril und Butadien/Styrol Bindemitteln verwendet werden, während Phenolharze und/oder Melaminvernetzungsmittel mit Epoxybindemitteln verwendet werden.

2. Eine Beschichtungsdispersion gemäß Anspruch 1, wobei das Verhältnis des Graphits, Rußes oder des Gemisches davon zum Bindemittel im Bereich von 1 bis 6 liegt.

3. Eine Beschichtungsdispersion gemäß Anspruch 2, wobei das Verhältnis des Graphits, Rußes oder des Gemisches davon zum Bindemittel im Bereich von 1 bis 4 liegt.

4. Eine Beschichtungsdispersion gemäß Anspruch 2, wobei die Dispersion einen Wassergehalt von zwischen etwa 30 und etwa 90 Gew.-% aufweist.

5. Eine Beschichtungsdispersion gemäß Anspruch 4, wobei die Graphit- und/oder Rußmischung vorzugsweise 10 bis 60 Gew.-%, bezogen auf die trockene Masse, ausmacht.

6. Eine Beschichtungsdispersion gemäß Anspruch 2, wobei die Dispersion zusätzlich ein oder mehrere Entschäumungsmittel, Konservierungsmittel, Dispergiermittel, Benetzungsmittel, Tenside oder Mischungen davon enthält.

7. Eine Beschichtungsdispersion gemäß Anspruch 6, wobei das ein oder mehrere Entschäumungsmittel, Konservierungsmittel, Dispergiermittel, Benetzungsmittel, Tensid oder Mischungen davon zwischen 0,01 bis 5% des Gewichts der gesamten Formulierung ausmachen.

8. Eine Beschichtungsdispersion gemäß Anspruch 7, wobei die Dispersion 0,05 bis 5 Gew.-% eines Benetzungsmittels enthält.

9. Eine Beschichtungsdispersion gemäß Anspruch 6, wobei die Dispersion 0,05 bis 5% eines Tensides enthält.

10. Eine Beschichtungsdispersion gemäß Anspruch 5, wobei das Härtungsmittel ein teilweise alkyliertes Melamin mit einer höheren Iminogruppe ist.

11. Eine Beschichtungsdispersion gemäß Anspruch 9, umfassend 0 bis 5 Gew.-% eines zweiten Vernetzungsmittels.

12. Eine Beschichtungsdispersion gemäß Anspruch 11, wobei das zweite Vernetzungsmittel Carbodiimid ist.

13. Eine Beschichtungsdispersion nach Anspruch 10, die zusätzlich einen Katalysator, ausgewählt aus der aus Aminsalzen von Paratoluolsulfonsäure, epoxy-blockierter Dinonylnaphthalinsulfonsäure und Gemischen davon bestehenden Gruppe umfasst.

14. Eine Beschichtungsdispersion gemäß Anspruch 13, wobei die Dispersion eine Viskosität zwischen 50 und 1200 cps aufweist.

15. Eine Beschichtungsdispersion gemäß Anspruch 14, wobei das Bindemittel einen Epoxyester mit einer Säurezahl von 10 bis 100 enthält.

16. Eine Bindemitteldispersion nach Anspruch 14, wobei die Dispersion Styrol und Acrylate in einem Styrol/Acrylatverhältnis im Bereich von 0,01 bis 9 enthält.

17. Eine Beschichtungsdispersion nach Anspruch 14, wobei die Dispersion ein Styrolbutadienharz enthält, das ein Styrol/Butadienverhältnis im Bereich von 0,1 bis 9 aufweist.

18. Eine Beschichtungsdispersion gemäß Anspruch 14, wobei die Dispersion Butadien/Acrylonitril in einem Verhältnis von 0,01 bis 9 enthält.

19. Ein Verfahren zur Härtung einer Beschichtungsdispersion gemäß Anspruch 1, wobei die Härtungstemperatur im Bereich von 100°C bis 250°C liegt und zwischen etwa 15 Sekunden und etwa 16 Minuten gehalten wird.

20. Ein Schutzfilm, der aus einer Beschichtungsdispersion gemäß Anspruch 1 hergestellt wird und einen spezifischen Widerstand im Bereich von 50 bis 100 Ohm pro Fläche aufweist.

21. Schutzfilm gemäß Anspruch 20, der einen spezifischen Widerstand aufweist, der nicht mehr als doppelt so hoch wie der Ausgangswert ist, nachdem der Schutzfilm einer 40%igen KOH-Lösung für einen Zeitraum von 72 Stunden bei 80° ausgesetzt war.

22. Verwendung einer Beschichtungsdispersion gemäß Anspruch 1 zur Herstellung einer Kathodenbeschichtung für ein Energiespeichergerät, ausgewählt aus der Gruppe, bestehend aus einer Batterie, einer Brennstoffzelle oder einem Kondensator.

23. Verwendung einer Beschichtungszusammensetzung gemäß Anspruch 1 zur Herstellung eines elektrisch leitfähigen Schutzfilms in einem Energiespeichergerät, wobei der leitfähige Schutzfilm eine Dicke im Bereich von 5 bis 200 µm aufweist.

24. Verwendung gemäß Anspruch 22, wobei das Energiespeichergerät eine Alkalibatterie ist, die einen elektrisch leitfähigen Film enthält, wobei der elektrisch leitfähige Film im Bereich von zwischen 20 und 100 µm dick ist.

25. Verwendung gemäß Anspruch 22, wobei das Energiespeichergerät eine Brennstoffzelle ist, die einen elektrisch leitfähigen Schutzfilm enthält, wobei der elektrisch leitfähige Schutzfilm im Bereich von 5 bis 200 µm dick ist.

26. Verwendung gemäß Anspruch 25, wobei der elektrisch leitfähige Film im Bereich von 20 bis 100 µm dick ist.

27. Verwendung gemäß Anspruch 22, wobei das Energiespeichergerät ein Kondensator ist, der einen elektrisch leitfähigen Schutzfilm enthält, wobei der leitfähige Schutzfilm im Bereich von 5 bis 200 µm dick ist.

28. Verwendung gemäß Anspruch 27, wobei der leitfähige Schutzfilm im Bereich von zwischen 20 und etwa 100 µm dick ist.

## Revendications

1. Dispersion de revêtement pour le revêtement d'un dispositif de stockage d'énergie composée de graphite, de noir de carbone ou de leur mélange, d'un liant, et d'un ou plusieurs agents de réticulation, ladite dispersion de revêtement étant appliquée sous forme de dispersion aqueuse homogène qui forme un film de protection sur le dispositif de stockage d'énergie, dans laquelle les liants sont sélectionnés dans le groupe composé de styrène-acrylique, d'acrylonitrile-butadiène, de styrène-butadiène ou d'époxy avec de l'ester d'époxyde, et dans laquelle des agents de réticulation du type mélamine et/ou carbodiimide sont utilisés avec des liants du type styrène-acrylique, acrylonitrile-butadiène et styrène-butadiène, alors que des agents de réticulation du type résine phénolique et/ou mélamine sont utilisés avec des liants époxydes.

2. Dispersion de revêtement de la revendication 1, dans laquelle le rapport du graphite, du noir de carbone ou de leur mélange au liant se trouve dans la plage de 1 à 6.

3. Dispersion de revêtement de la revendication 2, dans laquelle le rapport du graphite, du noir de carbone ou de leur mélange au liant se trouve dans la plage de 1 à 4.

4. Dispersion de revêtement de la revendication 2, ladite dispersion ayant une teneur en eau comprise entre environ 30 et environ 90% en poids.

5. Dispersion de revêtement de la revendication 4, dans laquelle le mélange de graphite et/ou de noir de carbone représente de préférence 10 à 60% en poids de matière sèche.

6. Dispersion de revêtement de la revendication 2, ladite dispersion contenant en plus un ou plusieurs agents anti-mousse, agents de conservation, agents dispersants, agents mouillants, agents tensioactifs ou leurs mélanges.

7. Dispersion de revêtement de la revendication 6, dans laquelle lesdits un ou plusieurs agents anti-mousse, agents de conservation, agents dispersants, agents mouillants, agents tensioactifs ou leurs mélanges constituent entre 0,01 et 5% du poids total de la formulation.

8. Dispersion de revêtement de la revendication 7, ladite dispersion contenant 0,05 à 5% en poids d'un agent mouillant.

9. Dispersion de revêtement de la revendication 6, ladite dispersion contenant 0,05 à 5% d'un agent tensioactif.

10. Dispersion de revêtement de la revendication 5, dans laquelle l'agent de durcissement est une mélamine partiellement alkylée possédant un groupe imino supérieur.

11. Dispersion de revêtement de la revendication 9, comprenant 0 à 5% en poids d'un deuxième agent de réticulation.

12. Dispersion de revêtement de la revendication 11, dans laquelle le deuxième agent de réticulation est le carbodiimide.

13. Dispersion de revêtement de la revendication 10, comprenant en outre un catalyseur sélectionné dans le groupe composé d'un sel d'amine d'acide para-toluène-sulfonique, d'acide dinonylnaphtalène-sulfonique bloqué par un époxy, ou de leurs mélanges.

14. Dispersion de revêtement de la revendication 13, ladite dispersion présentant une viscosité entre 50 et 1200 cps.

15. Dispersion de revêtement de la revendication 14, dans laquelle le liant contient un ester d'époxy ayant un indice d'acide de 10 à 100.

16. Dispersion de revêtement de la revendication 14, ladite dispersion contenant du styrène et de l'acrylique dont le rapport styrène/acrylique se trouve dans la plage de 0,01 à 9.

17. Dispersion de revêtement de la revendication 14, ladite dispersion contenant une résine de butadiène-styrène dont le rapport styrène/butadiène est dans la plage de 0,1 à 9.

18. Dispersion de revêtement de la revendication 14, ladite dispersion contenant du butadiène/acrylonitrile présentant un rapport dans la plage de 0,01 à 9.

19. Procédé de durcissement d'une dispersion de revêtement de la revendication 1, dans lequel la température de durcissement se trouve dans la page de 100°C à 250°C pendant environ 15 secondes jusqu'à environ 16 minutes.

20. Film de protection qui est formé par la dispersion de revêtement de la revendication 1, ayant une résistivité dans la plage de 5 à 100 ohms/carré.

21. Film de protection de la revendication 20, présentant une résistance qui ne dépasse pas deux fois la valeur initiale après exposition du film de protection à une solution à 40% de KOH pendant 72 heures à 80°C.

22. Utilisation de la dispersion de revêtement de la revendication 1, pour la préparation d'un revêtement de cathode pour un dispositif de stockage d'énergie sélectionné dans le groupe composé d'une batterie, d'une pile à combustible ou d'un condensateur.

23. Utilisation de la dispersion de revêtement de la revendication 1, pour la préparation d'un film de protection électriquement conducteur dans un dispositif de stockage d'énergie, l'épaisseur du film de protection conducteur se trouvant dans la plage de 5 à 200 µm.

24. Utilisation selon la revendication 22, dans laquelle le dispositif de stockage d'énergie est une batterie alcaline contenant un film de protection électriquement conducteur, l'épaisseur du film de protection conducteur se trouvant dans la plage de 20 à 100 µm.

25. Utilisation selon la revendication 22, dans laquelle le dispositif de stockage d'énergie est une pile à combustible contenant un film de protection électriquement conducteur, l'épaisseur du film de protection conducteur se trouvant dans la plage de 5 à 200 µm.

26. Utilisation selon la revendication 25, dans laquelle l'épaisseur du film de protection conducteur se trouve dans la plage de 20 à 100 µm.

27. Utilisation selon la revendication 22, dans laquelle le dispositif de stockage d'énergie est un condensateur contenant un film de protection électriquement conducteur, l'épaisseur du film de protection conducteur se trouvant dans la plage de 5 à 200 µm.

28. Utilisation selon la revendication 27, dans laquelle l'épaisseur du film de protection conducteur se trouve dans la plage de 20 à 100 µm.
